# FASCICULE DE BREVET EUROPEEN

(11) **EP 2 703 568 B1**
(45) Date de publication et mention de la délivrance du brevet: **10.02.2016**
(21) Numéro de dépôt: 13177020.8
(22) Date de dépôt: 18.07.2013
(51) Int. Cl.: E03C 1/00, F24D 17/00

(54) **Récupérateur de chaleur pour douche**
Wärmerückgewinnung für Dusche
Heat recovery device for a shower

(30) Priorité: 28.08.2012 FR 1258023
(43) Date de publication de la demande: 05.03.2014
(73) Titulaire: KP1, 84000 Avignon (FR)
(72) Inventeur: Coutton, Florent, 30126 Saint Laurent des Arbres (FR)
(74) Mandataire: Beaudouin-Lafon, Emmanuel

(56) Documents cités:
- WO-A1-2005/106375
- WO-A1-2008/068500
- US-A1- 2007 170 270

## Description

L'invention concerne un récupérateur de chaleur destiné à être associé notamment à une douche afin de récupérer la chaleur des eaux grises issues de cette douche.

### ARRIERE PLAN DE L'INVENTION

Dans le cas d'une douche équipée d'un récupérateur de chaleur, l'eau collectée dans le bac de douche traverse un échangeur thermique avant d'être évacuée avec les eaux grises de l'habitation. Concrètement, cet échangeur thermique permet de transférer la chaleur portée par les eaux grises vers l'eau froide alimentant le mitigeur de cette douche.

L'échangeur thermique d'un tel récupérateur est généralement du type à plaques, ce qui permet de l'installer sous le bac de couche, du fait du faible volume de ce type d'échangeur. Un récupérateur de ce genre est décrit dans WO 2008/068500.

Un tel récupérateur de chaleur finit généralement par se boucher, mais comme le débouchage de l'échangeur n'est pas toujours une opération simple, il peut en résulter que la douche devient inutilisable pendant une longue période.

### OBJET DE L'INVENTION

Le but de l'invention est de proposer une solution permettant d'utiliser la douche lorsque son échangeur est bouché.

### RESUME DE L'INVENTION

A cet effet, l'invention a pour objet un récupérateur de chaleur selon l'objet de la revendication 1.

### DESCRIPTION DETAILLEE DE L'INVENTION

L'idée à la base de l'invention est de concevoir le récupérateur de chaleur de telle manière qu'un bouchage de son échangeur thermique ne bouche pas le récupérateur dans son ensemble.

Le récupérateur de chaleur selon l'invention est représenté schématiquement en perspective à la figure unique où il est repéré par 1. Ce récupérateur comporte un échangeur thermique 2 qui est connecté à quatre conduites pour être traversé d'une part par de l'eau grise relativement chaude provenant d'un receveur de douche non représenté, et d'autre part par de l'eau froide d'alimentation du mitigeur de douche afin de la réchauffer.

Ce récupérateur de chaleur 1 comporte un réseau de canalisation d'eau grise comprenant en partie supérieure, c'est-à-dire au dessus du niveau de l'échangeur 2, une entrée d'eau grise 3 destinée à recevoir l'eau du receveur de douche, et en partie inférieure, c'est-à-dire au dessous du niveau de l'échangeur 2, une sortie d'eau grise 4 destinée à être connectée à une évacuation des eaux grises du bâtiment dans lequel la douche est installée.

L'ensemble du récupérateur de chaleur 1 est ici conçu pour être monté directement sous un receveur de douche, de manière à collecter l'eau du receveur en l'utilisant pour réchauffer l'eau froide alimentant le mitigeur cette douche.

Le réseau de canalisations comporte une canalisation d'admission 6 par laquelle l'entrée d'eau grise 3 est reliée à une entrée d'eau de réchauffement de l'échangeur thermique 2, ainsi qu'une canalisation de refoulement par laquelle une sortie d'eau de réchauffement de l'échangeur 2 est reliée à la sortie 4 du récupérateur de chaleur.

Complémentairement, l'échangeur thermique 2 comporte une admission d'eau froide 8 et une sortie d'eau froide réchauffée 9. Il est agencé pour que l'eau grise provenant de la canalisation 6 le traverse avant d'être évacuée par la canalisation 7, de manière à réchauffer l'eau froide qui traverse également l'échangeur en sens inverse, lorsque le système est en fonctionnement.

Ainsi, en fonctionnement normal, l'eau grise est admise dans l'entrée 3 du récupérateur ce qui est représenté par la flèche en trait double, pour être acheminée dans l'échangeur 2 par la canalisation d'admission 6 comme indiqué par la flèche en trait continu simple.

Une fois que l'eau grise a traversé l'échangeur 2 pour réchauffer l'eau froide, elle est évacuée par la canalisation 7 comme représenté par la flèche en trait continu simple, pour ressortir à la sortie 4 du récupérateur ce qui est illustré par la seconde flèche en trait double.

Selon l'invention, le récupérateur de chaleur est équipé d'un trop plein, sous forme d'une canalisation 11 reliée à la canalisation d'admission 6 à un niveau situé au dessus de l'échangeur 2 et sous l'entrée 3, cette canalisation 11 étant reliée à la sortie 4 du récupérateur de chaleur.

En fonctionnement, si l'échangeur 2 est bouché, l'eau grise admise 3 en parvient pas à s'introduire dans cet échangeur, de sorte que le niveau monte dans la canalisation d'admission des eaux grises 6. Ce niveau monte jusqu'à atteindre la canalisation 11, à partir de quoi, l'eau grise admise par l'entrée 3 s'écoule directement vers la sortie 4 pour y être évacuée. Dans ce cas, comme illustré par la flèche en pointillés l'eau grise transite via le trop-plein que constitue cette canalisation 11 vers la sortie 4 au lieu de transiter dans l'échangeur thermique 2.

Ainsi, comme on le comprend, lorsque l'échangeur thermique 2 est bouché, l'eau grise issue du receveur de douche est naturellement et directement évacuée vers la sortie 4 du récupérateur de chaleur 1, de sorte que la douche reste utilisable.

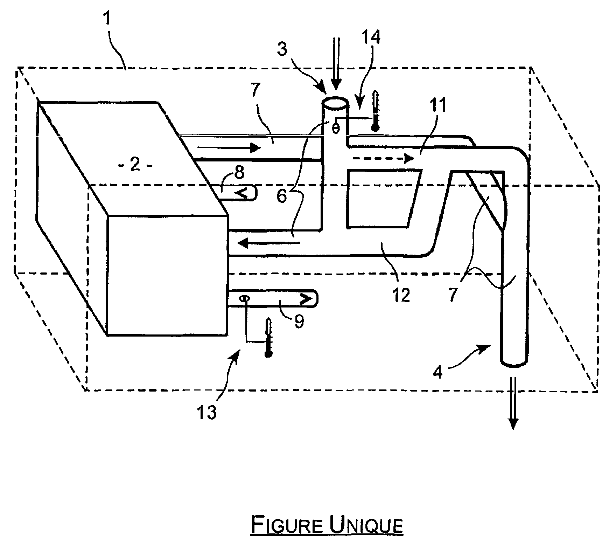

Complémentairement, comme visible à la figure 1, le réseau de canalisations de l'échangeur comporte encore une autre canalisation 12, qui relie l'entrée d'eau grise ou de réchauffement de l'échangeur à la canalisation 11 formant trop-plein. La canalisation 12 est inclinée de manière à favoriser l'écoulement d'eau venant l'entrée de l'échangeur thermique 2, vers la sortie 4.

Cette canalisation 12 facilite le débouchage de l'échangeur 2 en permettant d'injecter dans celui-ci de l'eau en sens inverse (à contre-courant) de son fonctionnement normal : l'eau injectée en sortie d'échangeur s'écoule alors via le tronçon incliné 12 vers la sortie 4, sans remonter par l'entrée 3 d'eau grise du récupérateur. Comme on le comprend, cette canalisation 12 permet ainsi, le cas échéant, de simplifier le débouchage de l'échangeur.

Par ailleurs, le récupérateur selon l'invention est pourvu de moyens de détection du boucage de son échangeur thermique. Ces moyens comportent principalement une première sonde thermique 13 pour mesurer la température de l'eau grise issue du bac de douche, et une seconde sonde thermique 14 mesurant la température de l'eau froide réchauffée issue de l'échangeur thermique 2.

Ces deux sondes sont reliées à un circuit électronique ou analogue qui compare les températures qu'elles mesurent pour conclure que l'échangeur 2 est bouché, dans le cas où l'écart de température des deux sondes est supérieur à une valeur seuil.

Concrètement, lorsque l'échangeur est bouché, il ne réchauffe pas l'eau froide, de sorte que l'écart entre la température de l'eau grise issue du receveur et l'eau froide sortant de l'échangeur est élevé. A contrario, en fonctionnement normal, c'est-à-dire lorsque l'échangeur n'est pas bouché, l'eau froide réchauffée sortant de l'échangeur 2 a une température proche de celle de l'eau grise issue du receveur de douche.

Dans l'exemple illustré à la figure unique, la première sonde thermique 13 est montée au niveau de la canalisation 6 à proximité de l'entrée d'eau grise, et la seconde sonde thermique 14 est montée sur la canalisation 9 correspondant à la sortie de l'eau froide réchauffée issue de l'échangeur thermique.

En pratique, le circuit électronique relié aux sondes alimente une diode visible depuis l'intérieur de la douche, et cette diode s'allume lorsque l'écart de température des sondes 13 et 14 est trop important, de manière à alerter l'utilisateur du fait qu'il convient de procéder au débouchage de l'échangeur thermique.

## Revendications

1. Récupérateur de chaleur (1) comportant une entrée d'eau grise (3) destinée à recevoir l'eau issue d'une douche et une sortie d'eau grise (4) destinée à l'évacuation de cette eau, ce récupérateur (1) comportant un échangeur thermique (2) connecté à l'entrée d'eau grise (3) et à la sortie d'eau grise (4) ainsi qu'à une canalisation d'alimentation en eau de la douche pour transférer la chaleur portée par l'eau grise vers l'eau d'alimentation de la douche, ce récupérateur (1) comportant un trop-plein (11) relié à l'entrée d'eau grise (3) et à la sortie d'eau grise (4), pour que l'eau issue de la douche passe via le trop plein directement à la sortie d'eau grise (4) du récupérateur (1) lorsque l'échangeur thermique (2) est bouché, **caractérisé en ce qu'**il comporte en outre deux sondes thermiques (13, 14) reliées à un circuit électronique, ces deux sondes thermiques étant agencées pour mesurer d'une part la température de l'eau grise issue de la douche, et d'autre part la température de l'eau d'alimentation de la douche réchauffée par l'échangeur, de manière à détecter un bouchage de l'échangeur thermique (2) lorsque l'écart entre les températures mesurées par ces deux sondes est supérieur à une valeur seuil.

## Patentansprüche

1. Wärmerückgewinnungsanlage (1), umfassend einen Waschwassereinlass (3), der dazu bestimmt ist, aus einer Dusche stammendes Wasser aufzunehmen, und einen Waschwasserauslass (4), der zum Abführen dieses Wasser bestimmt ist, wobei diese Rückgewinnungsanlage (1) einen Wärmetauscher (2) umfasst, der an den Waschwassereinlass (3) und an den Waschwasserauslass (4) angeschlossen ist, sowie an eine Leitung zur Wasserversorgung der Dusche, um die von dem Waschwasser mitgeführte Wärme auf das Wasser zur Versorgung der Dusche zu übertragen, wobei diese Rückgewinnungsanlage (1) einen Überlauf (11) umfasst, der mit dem Waschwassereinlass (3) und dem Waschwasserauslass (4) verbunden ist, damit das aus der Dusche stammende Wasser über den Überlauf direkt zum Waschwasserauslass (4) der Rückgewinnungsanlage (1) fließt, wenn der Wärmetauscher (2) verstopft ist, **dadurch gekennzeichnet, dass** sie ferner zwei Wärmesonden (13, 14) umfasst, die an eine elektronische Schaltung angeschlossen sind, wobei diese beiden Wärmesonden so ausgebildet sind, dass sie einerseits die Temperatur des aus der Dusche stammenden Waschwassers und andererseits die Temperatur des durch den Tauscher wiedererwärmten Wassers zur Versorgung der Dusche messen, derart, dass eine Verstopfung des Wärmetauschers (2) erfasst wird, wenn die Differenz zwischen den von diesen beiden Sonden gemessenen Temperaturen größer als ein Schwellwert ist.

## Claims

1. Heat recuperator (1) including a grey water inlet (3) intended to receive water from a shower and a grey water outlet (4) intended for evacuation of this water, this recuperator (1) including a heat exchanger (2) connected to the grey water inlet (3) and to the grey water outlet (4) and to a water feed pipe of the shower to transfer heat carried by the grey water to the feed water for the shower, this recuperator (1) including an overflow (11) connected to the grey water inlet (3) and to the grey water outlet (4) so that the water from the shower passes via the overflow directly to the grey water outlet (4) of the recuperator (1) when the heat exchanger (2) is blocked, **characterised in that** it further includes two heat sensors (13, 14) connected to an electronic circuit, these two heat sensors being adapted to measure on the one hand the temperature of the grey water from the shower and on the other hand the temperature of the feed water of the shower heated by the exchanger, so as to detect blocking of the heat exchanger (2) if the difference between the temperatures measured by these two sensors is above a threshold value.
